# EUROPEAN PATENT APPLICATION

(11) **EP 4 685 445 A1**
(43) Date of publication of application: **28.01.2026**
(21) Application number: 24190025.7
(22) Date of filing: 22.07.2024
(51) Int. Cl.: G01J 3/02, G01J 3/42, G01J 3/10, G01J 1/44

(54) **INTEGRATED SPECTROMETER READOUT ELECTRONICS**

(71) Applicant: trinamiX GmbH, 67063 Ludwigshafen am Rhein (DE)
(72) Inventor: STEEG, Matthias, 67059 Ludwigshafen am Rhein (DE); OEGUEN, Celal Mohan, 67059 Ludwigshafen am Rhein (DE)
(74) Representative: Altmann Stößel Dick Patentanwälte PartG mbB

(57) **Abstract**

The present invention relates to a readout unit (110) comprising at least two readout channels (112), wherein each readout channel (112) is configured for monitoring at least one operational parameter of an optoelectronic device (114) and, thereby, generating at least one measurement signal related to the operational parameter of the optoelectronic device (114) wherein the at least two readout channels (112) are configured to be fitted interchangeably with at least two different types of optoelectronic devices (114); at least one trigger channel (116) configured for triggering the monitoring of the operational parameters by using the at least two readout channels (112), wherein the triggering is performed in a simultaneous manner.

## Description

### Technical Field

The invention relates to a readout unit, a spectrometer device for obtaining at least one item of spectral information on at least one object, a mobile device and a method for operating a spectrometer device for obtaining spectral information on at least one object.

The methods and devices according to the present invention specifically may be employed for example in various areas of daily life, security technology, gaming, traffic technology, production technology, photography such as digital photography or video photography for arts, documentation or technical purposes, safety technology, information technology, agriculture, crop protection, maintenance, cosmetics, medical technology or in the sciences. However, other applications are also possible.

### Background art

Nowadays there seem to be already quite a number of established spectroscopic measurement applications for the consumer market. These applications, typically, provide basic but omnipresent functionalities. As an example, step tracking and pulsoxymetry are frequently implemented in wearables. On the other hand, these functionalities are well integrated and could be used to complement other applications.

Near infrared spectroscopy in the IR-B region between 1.4 µm and 3 µm has shown to offer good results in lab applications and has a great potential for the consumer market. However, consumer products making use of infrared spectroscopy consumer have not deeply penetrated the market yet.

In order to implement a spectrometer device a plurality of components are, typically, required, such as at least one light source, at least one detector, optical elements disposed in the optical path, at least one driver for the light source driver, readout electronics and computer algorithms. The performance of the spectrometer device may depend on the performance of these components. Thus, it may also be necessary to work with a plurality of suppliers towards a product that is specifically designed for these parts to functions as a system. The consumer marked is interested in a wide range of applications, which generally requires the use of cost intensive broadband optical components. To limit the costs, the consumer market spectrometers may be required to work with less and smaller wavelength ranges. That may require the use of a limited number of light sources and detectors. Still, the readout electronics and light source drivers need to be adequate to provide the required performance.

Specialized components may be required since light source drivers and readout electronics are not available off-the shelf that work performant for each application. Since, additionally to the requirement of low costs, for many applications also space and power constraints limit the light sources and detectors in number, power and size, these components have to be selected for specific applications.

### Problem to be solved

It is therefore desirable to provide a readout unit, a spectrometer device for obtaining at least one item of spectral information on at least one object, a mobile device and a method for operating a spectrometer device for obtaining spectral information on at least one object, which at least partially address the above-mentioned technical challenges and at least substantially avoid the disadvantages of known methods and devices.

In particular, it is an object of the present invention to provide methods and devices that allow for an easy and interchangeable functional connection of a variety of differing optical components.

In particular, the present invention may be applicable to established spectrometer applications as well as novel ones.

Further in particular, the present invention may provide an improved accuracy for the operation of the spectrometer device, specifically when deriving spectral information.

### Summary

This problem is addressed by the readout unit, the spectrometer device for obtaining at least one item of spectral information on at least one object, the mobile device and the method for operating a spectrometer device for obtaining spectral information on at least one object with the features of the independent claims. Advantageous embodiments which might be realized in an isolated fashion or in any arbitrary combinations are listed in the dependent claims as well as throughout the specification.

In a first aspect, a readout unit is disclosed. The readout unit comprises at least two readout channels, wherein each readout channel is configured for monitoring at least one operational parameter of a, preferably different, optoelectronic device and, thereby, generating at least one measurement signal related to the at least one operational parameter of the optoelectronic device wherein the at least two readout channels are configured to be fitted interchangeably with at least two different types of optoelectronic devices. Particularly each of the at least two readout channels may be configured to be fitted interchangeably with at least two different types of optoelectronic devices. The readout unit further comprises at least one trigger channel configured for triggering the monitoring of the operational parameters by using the at least two readout channels, wherein the triggering is performed in a simultaneous manner.

The term "readout" as used herein is a broad term and is to be given its ordinary and customary meaning to a person of ordinary skill in the art and is not to be limited to a special or customized meaning. The term specifically may refer, without limitation, to the process of monitoring the at least one operational parameter of an optoelectronic device and, thereby, generating a measurement signal and/or detector signal. The term "channel" as used herein is a broad term and is to be given its ordinary and customary meaning to a person of ordinary skill in the art and is not to be limited to a special or customized meaning. The term specifically may refer, without limitation, to an interface configured for connecting a plurality of components and/or devices in a manner that data or signals may be transferred between the components and/or devices. The term "readout channel" as used herein is a broad term and is to be given its ordinary and customary meaning to a person of ordinary skill in the art and is not to be limited to a special or customized meaning. The term specifically may refer, without limitation, to an interface configured for connecting an optoelectronic device to the readout unit in a manner that the at least one operational parameter of the optoelectronic device can be monitored by using the readout unit.

The term "readout unit" as used herein is a broad term and is to be given its ordinary and customary meaning to a person of ordinary skill in the art and is not to be limited to a special or customized meaning. The term specifically may refer, without limitation, to an arbitrary device or a combination of devices configured for comprising an interface configured for connecting an optoelectronic device to the readout unit in a manner that the at least one operational parameter of the optoelectronic device can be monitored by using the readout unit. The readout unit may be comprised by a spectrometer device. In particular, the readout unit may comprise at least two, three, four or even more readout channels.

The readout unit may comprise or may be an integrated circuit. The term "integrated circuit", also referred to as "microchip", as used herein is a broad term and is to be given its ordinary and customary meaning to a person of ordinary skill in the art and is not to be limited to a special or customized meaning. The term specifically may refer, without limitation, to an arbitrary electronic device comprising a plurality of interconnected electronic components, such as transistors, resistors and capacitors. The electronic component may be etched onto a piece of semiconductor material. The integrated circuit may be a monolithic integrated circuit. The term "monolithic integrated circuit" as used herein is a broad term and is to be given its ordinary and customary meaning to a person of ordinary skill in the art and is not to be limited to a special or customized meaning. The term specifically may refer, without limitation, to an integrated circuit in which all interconnected electronic components of the integrated circuit are fabricated on a single piece of semiconductor material.

The term "monitoring" as used herein is a broad term and is to be given its ordinary and customary meaning to a person of ordinary skill in the art and is not to be limited to a special or customized meaning. The term specifically may refer, without limitation, to the process of continuously measuring at least one parameter of a device, such as an operational parameter. Monitoring may be performed in order to determine the performance of the device. In particular, an operational parameter from an optoelectronic device may be measured. Monitoring may include generating at least one measurement signal, wherein the measurement signal is related to the operational parameter. The "measurement signal" may comprise information on the operational parameter. The measurement signal may depend on the operational parameter. Monitoring may be performed in a continuous manner. At least one measurement signal may be generated while a further measurement signal related to a detector signal is generated. During a readout of the detector signal a plurality of measurement signals may be generated. A temporal evolution of the operational parameters may be determined by interpolating said plurality of readout measurement signals.

The term "operational parameter" as used herein is a broad term and is to be given its ordinary and customary meaning to a person of ordinary skill in the art and is not to be limited to a special or customized meaning. The term specifically may refer, without limitation, to a measurable characteristic of a component and/or a device that, results in a specified performance of the component and/or the device while currently set. The operational parameter may be an electrical parameter such as a voltage and/or a current. The operational parameter may be or may comprise a detector signal.

The term "optoelectronic device" as used herein is a broad term and is to be given its ordinary and customary meaning to a person of ordinary skill in the art and is not to be limited to a special or customized meaning. The term specifically may refer, without limitation, to a device used to detect or emit electromagnetic radiation. Typically, the detected or emitted electromagnetic radiation may be in the visible and near-infrared regions of the electromagnetic spectrum.

The term "fitted interchangeably" as used herein is a broad term and is to be given its ordinary and custom-ary meaning to a person of ordinary skill in the art and is not to be limited to a special or customized meaning. The term specifically may refer, without limitation, to the possibility of connecting at least one first component to a unit or at least one second component to the unit. The connection between the first component and the second component to the unit may be exchangeable and/or interchangeable. Thereby, an operational parameter of a first type of optoelectronic device and an operational parameter of a second type of optoelectronic device may be monitored by using the same readout channel. The readout channel may be configured in a manner that the operational parameter of the first type of optoelectronic device and the operational parameter of the second type of optoelectronic device may be monitored.

In order for a readout channel to be fitted interchangeably with at least two different types of optoelectronic devices, the readout channel may comprise at least one electrical component having an adjustable operation mode. The adjustable operation mode may comprise a plurality of differing operation states, wherein each operation state of the differing operation states is selected in order to be able to monitoring the at least one operational parameter of a specific optoelectronic device. The differing operation states may each have at least one specific electronic characteristic, such as a specific electric voltage and/or electric current. The at least one electrical component may be selected from at least one of: an electric resistor; an electric capacitor. For adjusting the operation mode, the at least one electronic component may be activated or deactivated. By activating or deactivating the at least one electrical component, at least one measurement parameter of the readout channel, preferably the measurement time, and/or the measurement range and/or the measurement gain, specifically the measurement gain characterizing the relation between the measurement signal and the measured operational parameter may be adjusted in a manner that the readout channel may be used to monitor the at least one operational parameter of a specific optoelectronic device. For example, an electric resistor may be activated in order to convert a forward bias voltage to an electrical current that is measureable by the readout unit.

In an application-specificreadout unit, at least one parameter of the ASIC may be adjusted by tuning of at least one component of the readout unit. Thereby, measurement accuracy may be increased and/or at least one property of a component comprised by the readout unit may be changed. The tuning of the at least one parameter may be performed by using a register comprised by the readout unit.

The term "type" as used herein is a broad term and is to be given its ordinary and customary meaning to a person of ordinary skill in the art and is not to be limited to a special or customized meaning. The term specifically may refer, without limitation, to a category of things sharing at least one common characteristics or attributes. The at least one common characteristics or attributes may be selected from at least one of: a common material, a common design or setup, a further common characteristic, such as a spectral characteristic. The at least one common characteristics may be a common electric readout characteristic. Consequently, a type of optoelectronic device may comprise the same electrical readout parameter As an example, photodiodes, phototransistors and photoresistors may be different types of photodetectors. As another example, different types of photodiodes may be operated under different bias conditions, such as a zero bias and/or a reverse bias, specifically with different bias voltages.

The term "trigger" or "trigger signal" as used herein is a broad term and is to be given its ordinary and customary meaning to a person of ordinary skill in the art and is not to be limited to a special or customized meaning. The term specifically may refer, without limitation, to a signal configured for initiating or starting a process. In particular, triggering may initiate the monitoring of the at least one operational parameter of the optoelectronic device. The monitoring of the at least one operational parameter of the optoelectronic device may be started when receiving the trigger or the trigger signal. Consequently, the term "trigger channel" as used herein is a broad term and is to be given its ordinary and customary meaning to a person of ordinary skill in the art and is not to be limited to a special or customized meaning. The term specifically may refer, without limitation, to an interface configured for transferring a trigger signal to a component and/or a device and, thereby, initiating a process. In order for the at least one trigger channel to be configured for triggering the monitoring of the operational parameters, the trigger channel may transfer a trigger signal to the at least two readout channels in order to start the monitoring of the operational parameters by using the at least two readout channels. The trigger signal may be internally generated by the readout unit, specifically the trigger signal may be generated by the micro processing element comprised by the readout unit.

The term "simultaneous" as used herein is a broad term and is to be given its ordinary and customary meaning to a person of ordinary skill in the art and is not to be limited to a special or customized meaning. The term specifically may refer, without limitation, to at least two independent events that overlap at least one of: partially; or fully, in time. In order for the triggering to be performed in a simultaneous manner, the trigger signal may be transferred by the trigger channel to the at least two readout channels at the same time. Consequently, the monitoring of the operational parameters of the optoelectronic devices via the at least two readout channels may start at the same time.

The at least one operational parameter may be selected from at least one of: a voltage; a current. The voltage may be a low voltage, wherein the low voltage may be a voltage of up to 1V, 2V, 3V, 4V or 5V. The current may be a low current, wherein the low current may be an electrical current of up to 20 µA, 40 µA, 60 µA, 80 µA or 100 µA. An offset may be subtracted from the overall current to improve the resolution to the dynamic range tradeoff.

The optoelectronic device may be selected from at least one of a light emitting element and/or a photosensitive element.

As further used herein, the term "light" as used herein is a broad term and is to be given its ordinary and customary meaning to a person of ordinary skill in the art and is not to be limited to a special or customized meaning. The term specifically may refer, without limitation, to electromagnetic radiation in one or more of the infrared, the visible and the ultraviolet spectral range. Herein, the term "ultraviolet spectral range", generally, refers to electromagnetic radiation having a wavelength of 1 nm to 380 nm, preferably of 100 nm to 380 nm. Further, in partial accordance with standard ISO-21348 in a valid version at the date of this document, the term "visible spectral range", generally, refers to a spectral range of 380 nm to 760 nm. The term "infrared spectral range" (IR) generally refers to electromagnetic radiation of 760 nm to 1000 µm, wherein the range of 760 nm to 1.5 µm is usually denominated as "near infrared spectral range" (NIR) while the range from 1.5 µ to 15 µm is denoted as "mid infrared spectral range" (MidIR) and the range from 15 µm to 1000 µm as "far infrared spectral range" (FIR). Preferably, light used for the typical purposes of the present invention is light in the infrared (IR) spectral range, more preferred, in the near infrared (NIR) and/or the mid infrared spectral range (MidIR), especially the light having a wavelength of 1 µm to 5 µm, preferably of 1 µm to 3 µm. This is due to the fact that many material properties or properties on the chemical constitution of many objects may be derived from the near infrared spectral range. It shall be noted, however, that spectroscopy in other spectral ranges is also feasible and within the scope of the present invention. Consequently, the term "light emitting element", also referred to as an "illumination source", as used herein is a broad term and is to be given its ordinary and customary meaning to a person of ordinary skill in the art and is not to be limited to a special or customized meaning. The term specifically may refer, without limitation, to an arbitrary device configured for generating or providing light, specifically "illumination light".

The light emitting element may be least one of a thermal radiator, a microelectromechanical system (MEMS)-based emitter, a laser, a light-emitting diode (LED). The laser may specifically be a vertical cavity surface emitting laser (VCSEL). The laser may particularly emit at least one wavelength in the infrared region. The light-emitting diode (LED) may particularly be a LED emitting light that is at least partially located in the infrared spectral range and/or a LED illuminating a phosphor for light-conversion of light generated by the LED, wherein the luminescent material may generate converted light that is at least partly located in the near-infrared spectral range.

The term "incandescent lamp" as used herein is a broad term and is to be given its ordinary and customary meaning to a person of ordinary skill in the art and is not to be limited to a special or customized meaning. The term specifically may refer, without limitation, to an electric light having a heatable element, such as a wire filament heated, which is capable of being heated to a temperature at which it emits light, especially infrared light. Since the incandescent lamp can, therefore, be considered as a thermal emitter within the infrared spectral range, an emission power of the incandescent lamp decreases with increasing wavelength. The thermal radiator may be selected from an incandescent lamp or a thermal infrared emitter. The term "thermal infrared emitter" as used herein is a broad term and is to be given its ordinary and customary meaning to a person of ordinary skill in the art and is not to be limited to a special or customized meaning. The term specifically may refer, without limitation, to a micro-machined thermally emitting device, which comprises a radiation emitting surface as the light emitting element that emits the optical radiation to be monitored.

The term "microelectromechanical system (MEMS)-based emitter" as used herein is a broad term and is to be given its ordinary and customary meaning to a person of ordinary skill in the art and is not to be limited to a special or customized meaning. The term specifically may refer, without limitation, to an arbitrary apparatus configured for generating and/or emitting light comprising at least one element, wherein the element is associated with MEMS technology. MEMS technology, typically, involves the manufacture of mechanical and/or electrical elements on a microscale, typically below 1 µm or 100 µm or 1 mm or 5 mm or 50 mm. Alternatively or in addition, the light emitting element may be a laser, specifically a vertical cavity surface emitting laser (VCSEL), particularly emitting at least one wavelength in the infrared region.

The term "vertical-cavity surface-emitting laser" as used herein is a broad term and is to be given its ordinary and customary meaning to a person of ordinary skill in the art and is not to be limited to a special or customized meaning. The term specifically may refer, without limitation, to a semiconductor laser diode configured for laser beam emission perpendicular with respect to a top surface. VCSELs are generally known to the skilled person such as from WO 2017 / 222 618 A.

The term "light emitting diode" or briefly "LED", as used herein, is a broad term and is to be given its ordinary and customary meaning to a person of ordinary skill in the art and is not to be limited to a special or customized meaning. The term specifically may refer, without limitation, to an optoelectronic semiconductor device capable of emitting light when an electrical current flows through the device. The optoelectronic semiconductor device may be configured for generating the light due to various physical processes, including one or more of spontaneous emission, induced emission, decay of metastable excited states and the like. Thus, as an example, the light-emitting diode, may comprise one or more of: a light-emitting diode based on spontaneous emission of light, in particular an organic light emitting diode, a light-emitting diode based on superluminescence (sLED), or a laser diode (LD). In the following, without narrowing the possible embodiments of the light emitting diode to any of the before-mentioned physical principles or setups, the abbreviation "LED" will be used for any type of light emitting diode.

The at least one type of light emitting element may be selected from a light emitting diode, an incandescent lamp, a thermal infrared emitter, and a semiconductor laser. The light emitting diode may have a phosphorus coating. The phosphorous coating may provide a conversion of input light from the LED, typically blue light in the wavelength range from 440 to 450 nm emitted from a GaN LED to the desired output wavelengths. The input light is usually partially converted and often multiple different phosphorous materials are used to get the desired output light spectrum.

The different types of light emitting elements may be classified by the material of or comprised by the light emitting elements, such as GaN or InGaAsP. Alternatively or in addition, the different types of light emitting elements may be classified by at least one common spectral characteristic, such a common spectral range of the emitted illumination light. Alternatively or in addition, the different types of light emitting elements may be classified by the design of the light emitting elements.

The light emitting element may be a broadband light source. The wavelength interval of the broadband light source may specifically range from 380 nm to 3000 nm. In particular, e.g., more specifically, the broadband light source may range from 780 nm to 2500 nm. E.g., more specifically, the broadband light source may range from 1400 nm to 2400 nm. The broadband light source may comprise a plurality of light emitting diodes each having an emission spectrum comprising a specific wavelength interval. The plurality of the light emitting diodes may be configured to cover a selected wavelength interval which exceeds the specific wavelength intervals of each light emitting diode in the plurality of the light emitting diodes. The light emitting element may be operated using at least one of a current source, a voltage source.

The term "broadband" as used herein, is a broad term and is to be given its ordinary and customary meaning to a person of ordinary skill in the art and is not to be limited to a special or customized meaning. The term specifically may refer, without limitation, to the spectrum of the illumination light emitted by the light emitting element having a total full width half maximum (FWHM) of 20 nm to 1000 nm. Typically, LEDs may have a FWHM in the range of 20 nm to 200 nm, more specifically 80 nm. For LEDs having a phosphorous coating, the FWHM may be higher, specifically in the range from 200 nm, 300 nm, 400 nm or 500 nm to 1000 nm. Depending on the application, the output spectrum may have a plurality of peaks with an FWHM ranging from 50 to 200 nm, which are generated via phosphor conversion by a single LED. The broadband light emitting element may comprise a plurality of light emitting diodes each having an emission spectrum comprising a particular wavelength interval. The plurality of the light emitting diodes may be configured to cover a selected wavelength interval which exceeds the particular wavelength intervals of each light emitting diode in the plurality of the light emitting diodes.

The term "photosensitive element" as used herein is a broad term and is to be given its ordinary and customary meaning to a person of ordinary skill in the art and is not to be limited to a special or customized meaning. The term specifically may refer, without limitation, to a component of a detector that detects and responds to incident light. A photosensitive element may convert the incident light energy into electrical signals.

The different types of photosensitive elements may be classified by the material of or comprised by the photosensitive elements, such as PbS or InGaAs. Alternatively or in addition, the different types of photosensitive elements may be classified by at least one common spectral characteristic, such as a common spectral range of the received detection light. Alternatively or in addition, the different types of photosensitive elements may be classified by the design of the photosensitive elements.

The at least one type of photosensitive element may be selected from a photodiode, a photoresistor, and a phototransistor. The photodiode may be selected from at least one of a Silicon photodiode, a Ge photodiode, a InGaAs photodiode, a GaAs photodiode, a InP photodiode, a GaAISb photodiode, a GaAsSb photodiode, a GaN photodiode, a SiC photodiode. The photoresistor may be selected from at least one of a PbS photoresistor, a CdS photoresistor, a CdSe photoresistor, a CdHgTe photoresistor, a PbS photoresistor, a PbSe photoresistor, a InSb photoresistor, a InSe photoresistor, a SnS photoresistor, a SnSe photoresistor, a ZrS photoresistor, a ZrSe photoresistor, a graphene photoresistor.

Monitoring the at least one operational parameter may comprise monitoring at least one of a drift, such as a change in the performance and/or at least one electric characteristic over time, a degradation, such as a decline in performance due to factors such as thermal stress, electrical stress, or environmental conditions, of the at least two different types of optoelectronic devices. Monitoring the at least one operational parameter may comprise monitoring a change in the performance and/or at least one electric characteristic, specifically of the photosensitive element. This change in the performance and/or at least one electric characteristic may be related to a detector signal, specifically a detector signal of a photodetector induced by a change of the illumination of the photodetector. The at least two different types of optoelectronic devices may operate in at least one of a visible spectral range or an infrared spectral range.

The readout unit may comprise at least one first further readout channel. The at least one first further readout channel may be configured for monitoring at least one electrical parameter generated by a power supply. The power supply may be configured for providing power to the readout unit.

The term "power supply" as used herein is a broad term and is to be given its ordinary and customary meaning to a person of ordinary skill in the art and is not to be limited to a special or customized meaning. The term specifically may refer, without limitation, to an arbitrary device or a combination of devices configured to supply energy to at least one further device. The power supply may supply at least one of a voltage and/or a current to the at least one further device. The at least one power supply may be configured for at least one of: driving the light emitting element; driving the photosensitive element; generating the at least one bias voltage, preferably for the at least one photosensitive element. Alternatively or in addition, the at least one power supply may be configured for providing the power supply for the readout unit and/or the evaluation unit.

The term "bias voltage" as used herein is a broad term and is to be given its ordinary and customary meaning to a person of ordinary skill in the art and is not to be limited to a special or customized meaning. The term specifically may refer, without limitation, to an electrical voltage applied to a device or component to establish a desired operating condition.

The readout unit may comprise at least one second further readout channel. The second further readout channel may be configured for monitoring at least one temperature monitoring element, wherein the temperature monitoring element may be configured for monitoring at least one temperature of the optoelectronic device or optoelectronic devices. The term "temperature monitoring element" as used herein is a broad term and is to be given its ordinary and customary meaning to a person of ordinary skill in the art and is not to be limited to a special or customized meaning. The term specifically may refer, without limitation, to a measurement unit configured to generate at least one item of information on at least one temperature.

The at least one temperature monitoring element may comprise at least one temperature sensor element. The term "temperature sensor element" as used herein is a broad term and is to be given its ordinary and customary meaning to a person of ordinary skill in the art and is not to be limited to a special or customized meaning. The term specifically may refer, without limitation, to at least one sensing member configured to generate at least one item of information on a temperature by performing at least one temperature measurement. The temperature sensor element may be an external temperature sensor element.

The trigger channel may receive at least one trigger signal in order to trigger the monitoring of the readout channels from at least one of: a driving unit, an evaluation unit of a spectrometer device. The trigger signal may then be forwarded or transmitted the at least two readout channels. Alternatively or in addition, the driving unit and/or the evaluation unit may generate the trigger signal.

The term "to drive" as used herein is a broad term and is to be given its ordinary and customary meaning to a person of ordinary skill in the art and is not to be limited to a special or customized meaning. The term specifically may refer, without limitation, to the process of providing one or both of at least one operational parameter and/or electrical power to another device. Driving by providing the at least one operational parameter and/or electrical power to another device may be triggered by the trigger signal. The trigger signal may, consequently, initiate providing the at least one operational parameter and/or the electrical power to another device. The trigger signal may specifically be provided to the driving unit comprised by the spectrometer device configured for driving the respective optoelectronic device. Alternatively or in addition, the trigger signal may specifically be provided to the respective power supply that is supplying electrical power to the another device.. Consequently, the term "driving unit", as used herein, is a broad term and is to be given its ordinary and customary meaning to a person of ordinary skill in the art and is not to be limited to a special or customized meaning. The term specifically may refer, without limitation, to an arbitrary device or a combination of devices configured for providing one or both of at least one operational parameter and/or electrical power to another device.

The term "to evaluate", as used herein, is a broad term and is to be given its ordinary and customary meaning to a person of ordinary skill in the art and is not to be limited to a special or customized meaning. The term specifically may refer, without limitation, to the process of processing at least one first item of information in order to generate at least one second item of information thereby. Consequently, the term "evaluation unit", as used herein, is a broad term and is to be given its ordinary and customary meaning to a person of ordinary skill in the art and is not to be limited to a special or customized meaning. The term specifically may refer, without limitation, to an arbitrary device or a combination of devices configured to evaluate or process at least one first item of information, in order to generate at least one second item of information thereof. Thus, specifically, the evaluation unit may be configured for processing at least one input signal and to generate at least one output signal thereof. The at least one input signal, as an example, may comprise at least one detector signal provided directly or indirectly by the at least one detector. The at least one output signal, as an example, may comprise at least one item of spectral information.

As an example, the evaluation unit may be or may comprise one or more integrated circuits, such as one or more application-specific integrated circuits (ASICs), and/or one or more data processing devices, such as one or more of computers, digital signal processors (DSP), field programmable gate arrays (FPGA) preferably one or more microcomputers and/or microcontrollers. Additional components may be comprised, such as one or more preprocessing devices and/or data acquisition devices, such as one or more devices for receiving and/or preprocessing of the detector signals, such as one or more AD-converters and/or one or more filters. Further, the evaluation unit may comprise one or more data storage devices. Further, the evaluation unit may comprise one or more interfaces, such as one or more wireless interfaces and/or one or more wire-bound interfaces.

The readout unit may comprise at least one micro processing element configured for providing at least one trigger signal in order to trigger the monitoring of the readout channels.

The term "micro processing element" as used herein is a broad term and is to be given its ordinary and customary meaning to a person of ordinary skill in the art and is not to be limited to a special or customized meaning. The term specifically may refer, without limitation, to an electronic component configured for performing at least one of arithmetic and logic operations. The micro processing element may be configured for performing the functionality of a central processing unit. The micro processing element may be configured for interpreting and/or executing computer program instructions. The micro processing element may be configured for performing arithmetic operations.

The at least one micro processing element may further be configured for evaluating the at least one measurement signal related to the operational parameter of the optoelectronic device. Therein, the at least one measurement signal may be received from at least one readout channel of the at least two readout channels.

By evaluating the at least one measurement signal related to the optoelectronic device, at least one operational parameter for driving the optoelectronic device may be generated, wherein the at least one micro processing element may be further configured for determining the at least one operational parameter for driving the optoelectronic device in order to regulate the operation of the optoelectronic device.

The term "regulating" as used herein is a broad term and is to be given its ordinary and customary meaning to a person of ordinary skill in the art and is not to be limited to a special or customized meaning. The term specifically may refer, without limitation, to the process of adjusting the operation of at least one component to operate the at least one component in a desired manner. Regulating may comprise setting at least one parameter of the component in order to achieve a specified performance of the component.

The at least one micro processing element may be further configured for providing the generated at least one operational parameter for driving the optoelectronic device. The readout unit may further comprise at least one transmission channel. The transmission channel may be configured for transmitting the at least one operational parameter provided by the micro processing element to at least one of: the driving unit configured for driving the operation of the optoelectronic device, the evaluation unit of the spectrometer device. The optoelectronic device may update a current operational parameter with the operational parameter provided by the micro processing element.

The readout unit may further comprise a power supply, preferably wherein said power supply may provide an internal bias, configured for at least one of driving the at least one optoelectronic device, generating at least one bias voltage for at least one optoelectronic device.

The readout unit may further be configured for monitoring at least one operational parameter of the driving unit comprised by the spectrometer device by using a third further readout channel. The readout unit may further be configured for transmitting the read out operational parameter to the evaluation unit by using the at least one transmission channel

Monitoring at least one of: the first further readout channel, the second further readout channel, the third further readout channel may be performed simultaneously to the monitoring of the at least two readout channels. Triggering the monitoring of the operational parameters by using the at least two readout channels, may comprise triggering the monitoring of the operational parameters by using at least one of: the first further readout channel, the second further readout channel, the third further readout channel, preferably such that the triggering is performed in a simultaneous manner.

The term "spectrometer device" as used herein is a broad term and is to be given its ordinary and customary meaning to a person of ordinary skill in the art and is not to be limited to a special or customized meaning. The term specifically may refer, without limitation, to an optical device configured for acquiring at least one item of spectral information on at least one object. Specifically, the at least one item of spectral information may refer to at least one optical property or optically measurable property which is determined as a function of a wavelength, for one or more different wavelengths. More specifically, the optical property or optically measurable property, as well as the at least one item of spectral information, may relate to at least one property characterizing at least one of a transmission, an absorption, a reflection and an emission of the at least one object, either by itself or after illumination with external light. The at least one optical property may be determined for one or more wavelengths. The spectrometer device specifically may form an apparatus which is capable of recording a signal intensity with respect to the corresponding wavelength of a spectrum or a partition thereof, such as a wavelength interval, wherein the signal intensity may, specifically, be provided as an electrical signal which may be used for further evaluation.

The term "spectral information", also referred to as "spectroscopic information" or as "an item of spectral information", as used herein is a broad term and is to be given its ordinary and customary meaning to a person of ordinary skill in the art and is not to be limited to a special or customized meaning. The term specifically may refer, without limitation, to an item of information, e.g. on at least one object and/or radiation emitted by at least one object, characterizing at least one optical property of the object, more specifically at least one item of information characterizing, e.g. qualifying and/or quantifying, at least one of a transmission, an absorption, a reflection and an emission of the at least one object. As an example, the at least one item of spectral information may comprise at least one intensity information, e.g. information on an intensity of light being at least one of transmitted, absorbed, reflected or emitted by the object, e.g. as a function of a wavelength or wavelength sub-range over one or more wavelengths, e.g. over a range of wavelengths. Specifically, the intensity information may correspond to or be derived from the signal intensity, specifically the electrical signal, recorded by the spectrometer device with respect to a wavelength or a range of wavelengths of the spectrum.

The readout unit may further be configured for transmitting the operational parameter for driving the at least one optoelectronic device. Therein, the operational parameter may be transmitted to the evaluation unit.

The term "transmitting" as used herein is a broad term and is to be given its ordinary and customary meaning to a person of ordinary skill in the art and is not to be limited to a special or customized meaning. The term specifically may refer, without limitation, to a process of transferring or sending of an object and/or an item of information from a first location to a second location. In particular, an item of information may be transferred from a first component and/or device to a second component and/or device, preferably via a connection interface comprised by any one of the components and/or devices. Specifically, an operational parameter may be transferred from a first component and/or device to a second component and/or device.

In a further aspect, a spectrometer device for obtaining at least one item of spectral information on at least one object by spectroscopic measurement is disclosed. The spectrometer device comprises a readout unit as disclosed elsewhere herein. For this aspect, reference may be made to any further aspect, particularly any definition, Embodiment or claim given in the context of any further aspect.

The readout unit may be configured for a readout of the photosensitive element in order to generate at least one detector signal, specifically by using the at least two readout channels. Thereby, the readout unit may be an interface between the detector and the evaluation unit.

The spectrometer device further comprises:
- at least one light emitting element, wherein the light emitting element is configured for emitting illumination light onto the object in order to generate detection light;
- at least one detector, wherein the detector is configured for generating at least one detector signal when detecting the detection light;
- at least one evaluation unit, wherein the evaluation unit is configured for obtaining the item of spectral information by evaluating the generated at least one detector signal.

The "object" may, generally, be an arbitrary body, chosen from a living object and a non-living object. Thus, as an example, the at least one object may comprise one or more particles and/or one or more parts of a particle, wherein the at least one particle or the at least one part thereof may comprise at least one component which may provide a spectrum suitable for investigations. Additionally or alternatively, the object may be or may comprise one or more living beings and/or one or more parts thereof, such as one or more body parts of a human being, e.g. a user, and/or an animal.

The verb "to detect" as used herein is a broad term and is to be given its ordinary and customary meaning to a person of ordinary skill in the art and is not to be limited to a special or customized meaning. The term specifically may refer, without limitation, to the process of at least one of determining, measuring and monitoring at least one parameter, qualitatively and/or quantitatively, such as at least one of a physical parameter, a chemical parameter and a biological parameter. Specifically, the physical parameter may be or may comprise an electrical parameter. Consequently, the term "photosensitive detector", or "detector" as used herein is a broad term and is to be given its ordinary and customary meaning to a person of ordinary skill in the art and is not to be limited to a special or customized meaning. The term specifically may refer, without limitation, to an arbitrary device configured for detecting, i.e. for at least one of determining, measuring and monitoring, at least one parameter, qualitatively and/or quantitatively, such as at least one of a physical parameter, a chemical parameter and a biological parameter. The at least one detector may be configured for generating at least one detector signal, more specifically at least one electrical detector signal, such as an analogue and/or a digital detector signal, the detector signal providing information on the at least one parameter measured by the detector. The detector signal may directly or indirectly be provided by the at least one detector to the evaluation unit, such that the at least one detector and the evaluation unit may be directly or indirectly connected. The detector signals may be used as a "raw" detector signal and/or may be processed or preprocessed before further used, e.g. by filtering and the like. Thus, the at least one detector may comprise at least one processing device and/or at least one preprocessing device, such as at least one of an amplifier, an analogue/digital converter, an electrical filter and a Fourier transformation.

The at least one detector may be configured for detecting light propagating from the object to the spectrometer device or more specifically to the at least one detector of the spectrometer device. The at least one detector may be configured for determining at least one optical parameter, such as an intensity and/or a power of light by which at least one sensitive area of the detector is irradiated. More specifically, the at least one detector may comprise at least one photosensitive element and/or at least one optical sensor, such as at least one of a photodiode, a photocell, a photosensitive resistor, a phototransistor, a thermophile sensor, a photoacoustic sensor, a pyroelectric sensor, a photomultiplier and a bolometer. The at least one detector, thus, may be configured for generating at least one detector signal, more specifically at least one electrical detector signal, in the above-mentioned sense, providing information on at least one optical parameter, such as the power and/or intensity of light by which the detector or a sensitive area of the detector is illuminated. The at least one detector may be a Lead Sulfide (PbS) detector.

The detector may comprise a plurality of photosensitive elements, wherein each of the photosensitive elements may be configured for generating at least one detector signal for deriving the spectral information. The plurality of photosensitive elements may be arranged in an array. The term "array" as used herein is a broad term and is to be given its ordinary and customary meaning to a person of ordinary skill in the art and is not to be limited to a special or customized meaning. The term specifically may refer, without limitation, to a series of optical sensors which may, preferably, be arranged in a single line as a one-dimensional matrix along the length of the length variable filter or in more than one line, especially in two, three, or four parallel lines, in form of a two-dimensional matrix, in particular, in order to receive most of the intensity of the incident light as possible. Thus, a number N of photosensitive elements in one direction may be higher compared to a number M of photosensitive elements in a further direction such that the one-dimensional 1 × N matrix or a rectangular two-dimensional M × N matrix may be obtained, wherein M < 10 and N ≥ 10, preferably N ≥ 20, more preferred N ≥ 50. In addition, the matrixes may also be placed in a staggered arrangement.

The spectrometer device may further comprise at least two optoelectronic devices. Therein, the optoelectronic devices may be monitored by the readout unit via the at least two readout channels comprised by the readout unit.

At least one of the at least one light emitting element and the at least one detector, may be used as an optoelectronic device monitored by the readout unit via the at least two readout channels comprised by the readout unit.

The spectrometer device may further comprise at least one driving unit configured for driving the at least one optoelectronic device of the at least two optoelectronic devices in a manner that the driving unit may transmit at least one operational parameter to the at least one optoelectronic device.

The driving unit and/or the evaluation unit may further be configured for transmitting at least one trigger signal configured for triggering the monitoring of the operational parameters by using the at least two readout channels. Therein, the triggering is performed in a simultaneous manner.

The driving unit may further be configured for receiving the at least one measurement signal wherein the at least one measurement signal may be transmitted by the at least one transmission channel of the readout unit. Particularly, the driving unit may be configured in order to select and/or set the at least one operational parameter for driving the at least one optoelectronic device in order to regulate the operation of the at least one optoelectronic device. For example, the driving unit may be configured in order to select and/or determine at least one operational parameter for driving at least one optoelectronic device by evaluating the at least one measurement signal.

The driving unit may further be configured for transmitting the operational parameter for driving the at least one optoelectronic device. Therein, the operational parameter may be transmitted to the evaluation unit or the driving unit, preferably by using the at least one transmission channel.

The readout unit may further be configured for monitoring at least one operational parameter of the driving unit comprised by a spectrometer device, preferably by using a third further readout channel. Therein, the readout unit may be further configured for transmitting the readout operational parameter of the driving unit to the evaluation unit by using the at least one transmission channel.

The evaluation unit may further be configured for receiving the at least one measurement signal, wherein the at least one measurement signal is transmitted by the at least one transmission channel of the readout unit, particularly in order to compensate at least one of a drift, a degradation, of the at least two different types of optoelectronic devices when obtaining the item of spectral information.

The spectrometer device may further comprise at least one power supply. The power supply may be monitored by the readout unit via the at least one first further readout channel comprised by the readout unit. The power supply may be configured for providing power to the readout unit.

The spectrometer device may further comprise at least one temperature monitoring element. The temperature monitoring element may be monitored by the readout unit via the at least one second further readout channel comprised by the readout unit.

The at least one detector may comprise a plurality of photosensitive elements sensitive to differing wavelength intervals.

The spectrometer device may further comprise at least one wavelength-selective element. The wavelength-selective element may be disposed in at least one of the at least one beam path of the illumination light, the at least one beam path of the detection light.

The at least one wavelength-selective element may be configured and/or arranged in a manner that any photosensitive element of the plurality of photosensitive elements is exposed to an individual spectral range of light.

As used herein, the term "wavelength-selective element" is a broad term and is to be given its ordinary and customary meaning to a person of ordinary skill in the art and is not to be limited to a special or customized meaning. The term specifically may refer, without limitation, to an arbitrary optical element which interacts with differing spectral portions of incident light in a different manner, e.g. by having at least one wavelength-dependent optical property, such as at least one wavelength-dependent optical property selected from the list consisting of a degree of reflection, a direction of reflection, a degree of refraction, a direction of refraction, an absorption, a trans-mission, an index of refraction.

The wavelength-selective element may be configured such that each of the photosensitive elements may be exposed to the same spectral range of the detection light. The wavelength-selective element may be selected from the group of a tunable wavelength-selective element and a wavelength-selective element having a fixed transmission spectrum. By using a tunable wave-length selective element, as an example, differing wavelength ranges may be selected sequentially, whereas, by using a wavelength-selective element having a fixed transmission spectrum, the selection of the wavelength ranges may be fixed and may, however, be dependent e.g. on a detection position, thereby allowing, as an example, in the detection light beam path, for simultaneously exposing different detectors and/or different photosensitive elements of the detector to differing spectral ranges of light.

Thus the at least one wavelength-selective element may comprise at least one of a filter, a grating, a prism, a plasmonic filter, a diffractive optical element and a metamaterial. More specifically, the spectrometer device may comprise at least one wavelength-selective element disposed in a beam path of the light from the object, i.e. in the beam path of the detection light, wherein the wavelength-selective element, specifically may be configured such that each of the photosensitive elements is exposed to an individual spectral range of the light from the object. As an example, a variable wavelength-selective element may be used, the transmission of which de-pends on a position on the wavelength-selective element, such that, when the variable wave-length-selective element is placed on top of the array of photosensitive elements, the individual photosensitive elements are exposed to differing spectral ranges of the incident light, specifically the detection light from the object.

The wavelength-selective element may be selected from the group of a tunable wavelength-selective element and a wavelength-selective element having a fixed transmission spectrum. The wavelength-selective element may be or may comprise at least one of: a length variable filter; a static filter, such as a monochromatic filter; a tunable filter, particularly a MEMS Fabry-Perot cavity; an optical lens; a diffractive or dispersive element.

The term "length variable filter" as used herein is a broad term and is to be given its ordinary and customary meaning to a person of ordinary skill in the art and is not to be limited to a special or customized meaning. The term specifically may refer, without limitation, to an optical filter which comprises a plurality of individual filter elements, preferably a plurality of interference filter elements, which may, in particular, be provided in a continuous arrangement of the individual filter elements. Herein, each of the filter elements may form a bandpass with a variable center wave-length for each spatial position on the filter, preferably continuously, along a single dimension, which is, usually, denoted by the term "length", on a receiving surface of the length variable filter. The variable center wavelength may be a linear function of the spatial position of each filter element, in which case the length variable filter is usually referred to as a "linearly variable filter" or by its abbreviation "LVF". However, other kinds of functions may be applicable to the relation-ship between the variable center wavelength and the spatial position on the individual filter elements. Herein, the individual filter elements may be located on a transparent substrate which may, in particular, comprise at least one material that may show a high degree of optical transparency within in the infrared (IR) spectral range, especially, within the near-infrared (NIR) spectral range as described below in more detail, whereby varying spectral properties, especially continuously varying spectral properties, of the filter along length of the filter may be achieved. In particular, the length variable filter may be a wedge filter that may be adapted to carry at least one response coating on a transparent substrate, wherein the response coating may exhibit a spatially variable property, in particular, a spatially variable thickness. However, other kinds of length variable filters which may comprise other materials or which may exhibit a further spatially variable property may also be feasible. At a normal angle of incidence of an incident light ray or light beam, each of the filter elements as comprised by the length variable filter may have a bandpass width that may amount to a fraction of the center wavelength, typically to a few per-cent, of the particular filter.

The term "static filter" as used herein is a broad term and is to be given its ordinary and customary meaning to a person of ordinary skill in the art and is not to be limited to a special or customized meaning. The term specifically may refer, without limitation, to an optical filter, particularly a bandpass filter, which blocks and/or selects light of a predetermined wavelength range, specifically by reflecting and/or absorbing. The wavelength range may be fixed. A fixed wave-length length may be unchangeable and/or static. The optical properties of the static filter may not be time-varying.

The term "tunable filter" as used herein is a broad term and is to be given its ordinary and customary meaning to a person of ordinary skill in the art and is not to be limited to a special or customized meaning. The term specifically may refer, without limitation, to an optical filter which blocks and/or selects light of an adjustable wavelength range. The optical properties of the tunable filter may be time-varying. An interferometer may be used as a tunable filter, specifically a Fabry-Perot interferometer, Mach-Zehnder interferometer and/or a Michelson interferometer. Alternatively, angle-dependent wavelength shifts of a static filter may be utilized. This may be realized by using at least one micro electro mechanical system, MEMS, where moving parts of the interferometer are realized be using micro actuators.

The term "diffractive element" as used herein is a broad term and is to be given its ordinary and customary meaning to a person of ordinary skill in the art and is not to be limited to a special or customized meaning. The term specifically may refer, without limitation, to an item for shaping the incident radiation by diffraction of the incident radiation at an optical grating.

The length variable filter may comprise at least two bandpass filters, wherein each bandpass filter may be assigned to a respective pixelated sensor by being arranged within the field of view of the respective pixelated sensor, wherein each bandpass filter may be configured for selecting at least one wavelength of the accepted incident radiation. The term "bandpass filter" as used herein is a broad term and is to be given its ordinary and customary meaning to a person of ordinary skill in the art and is not to be limited to a special or customized meaning. The term specifically may refer, without limitation, to an optical filter that allows only incident radiation having a wavelength that is within a predefined range to pass. Incident radiation having a wavelength be-low and/or above the predefined range may be blocked or may be significantly attenuated. The selected at least one wavelength may be within the predefined range. The selected at least one wavelength may be transferred onto the respective pixelated sensor. The term "assigned to a respective pixelated sensor" as used herein is a broad term and is to be given its ordinary and customary meaning to a person of ordinary skill in the art and is not to be limited to a special or customized meaning. The term specifically may refer, without limitation, to transmitting the accepted incident radiation onto the respective pixelated sensor. Thereby, the at least two bandpass filters may be arranged in a manner that each bandpass filter of the at least two bandpass filters is placed within a field of view of a different pixelated sensor.

The length variable filter may comprise at least two bandpass filters, wherein each bandpass filter may be arranged in the field of view of a specific photosensitive element, wherein each bandpass filter may be configured for selecting at least one wavelength range of the detection light.

In a further aspect, a mobile device is disclosed. The mobile device comprises a spectrometer device as disclosed elsewhere herein.

The term "mobile device" as used herein is a broad term and is to be given its ordinary and customary meaning to a person of ordinary skill in the art and is not to be limited to a special or customized meaning. The term specifically may refer, without limitation, to a mobile electronics device more specifically to a mobile communication device, configured for providing access to at least one telecommunication network, such as a cell phone, smart phone or a wearable. The mobile device may be a portable device.

The term "portable" as used herein is a broad term and is to be given its ordinary and customary meaning to a person of ordinary skill in the art and is not to be limited to a special or customized meaning. The term specifically may refer, without limitation, to the property of at least one object of being moved by human force, such as by a single user. Specifically, the object characterized by the term "portable" may have a weight not exceeding 10 kg, specifically not exceeding 5 kg, more specifically not exceeding 1 kg or even not exceeding 500 g. Additionally or alternatively, the dimensions of the object characterized by the term "portable" may be such that the object extends by no more than 0.3 m into any dimension, specifically by no more than 0.2 m into any dimension. The object, specifically, may have a volume of no more than 0.03 m³, specifically of no more than 0.01 m³, more specifically no more than 0.001 m³ or even no more than 500 mm3. In particular, as an example, the portable spectrometer device may have dimensions of e.g. 10 mm by 10 mm by 5 mm. Specifically, the portable spectrometer device may be part of a mobile device or may be attachable to a mobile device, such as a notebook computer, a tablet, a cell phone, such as a smart phone, a smartwatch and/or a wearable computer, also referred to as "wearable", e.g. a body borne computer such as a wrist band or a watch. In particular, the a weight of the spectrometer device, specifically the portable spectrometer device, may be in the range from 1 g to 100 g, more specifically in the range from 1 g to 10 g.

In a further aspect, a method for operating a spectrometer device for obtaining spectroscopic information on at least one object is disclosed. The method comprises using a spectrometer device as disclosed elsewhere herein for obtaining spectroscopic information on at least one object.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. In most cases, when referring to the respective feature or element, the expressions "at least one" or "one or more" are not repeated, nonwithstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

The readout unit, the spectrometer device for obtaining at least one item of spectral information on at least one object, the mobile device and the method for operating a spectrometer device for obtaining spectral information on at least one object according to the present invention discussed elsewhere herein provide a large number of advantages over known devices and methods of similar kind.

In particular, the present invention provides methods and devices that allow for an easy and interchangeable functional connection of a variety of differing optical components. Further, the invention is applicable to established spectrometer applications as well as novel ones.

A readout unit for spectroscopic and optoelectronic measurements that can be used in a flexible manner with different light emitting elements and detectors is disclosed. Thereby, a plurality different spectroscopic applications are possible. In particular, the invention is applicable to established spectrometer applications as well as novel ones.

A readout unit is disclosed that enables monitoring of different components required to operate a spectrometer. The readout unit may be or may comprise an application specific integrated circuit (ASIC). The application specific integrated circuit (ASIC) may enable controlling and/or monitoring of different components required to operate a spectrometer. One component may be a photosensitive element such as a photodiode, a photoresistor and/or a phototransistor. One further component may be a light emitting element, specifically a light emitting diode and/or an incadescent lamp. Alternatively or in addition, the one component may be a temperature sensor and/or a component configured for bias voltage monitoring.

The application specific integrated circuit may allow driving and/or monitoring of different types of light sources covering different wavelength ranges in the visible and/or infrared spectral range. Particularly the operational parameters, such as drift and/or degradation, may be monitored.

Alternatively or in addition, the application specific integrated circuit may allow a read-out of different detector types to cover the visible and/or infrared spectral range. Monitoring may comprise monitoring the at least one applied bias voltage and/or monitoring the drift and/or degradation of the different detector.

Alternatively or in addition, the application specific integrated circuit may allow monitoring of temperature. Thereby, a compensation of temperature dependencies of individual components may be performed.

The application specific integrated circuit may allow the measurement of at least one optical parameter, e.g. a photosensitive element signal, at least one electrical parameter, e.g. a photosensitive element bias voltage and/or a light source operational parameter), at least one temperature parameter, e.g. a temperature of the photosensitive element and/or the light source and/or a temperature of a sensing element.

For this, the application specific integrated circuit may comprise a plurality of measurement channels that can monitor very low currents (pA level) and/or very small voltages (nV level), particularly also their respective difference may be measured.

Alternatively or in addition, the application specific integrated circuit may include at least one regulation circuitry configured for operating a plurality of current and/or voltage sources in order to drive the light source precisely such that only a small number of external power electronics components is required.

With this application specific readout unit as described elsewhere herein, a plurality of targeted spectroscopy solutions may be realized.

Summarizing and without excluding further possible embodiments, the following embodiments may be envisaged:
Embodiment 1: A readout unit comprising:
   - at least two readout channels, wherein each readout channel is configured for monitoring at least one operational parameter of a, preferably different, optoelectronic device and, thereby, generating at least one measurement signal related to the operational parameter of the optoelectronic device wherein the at least two readout channels are configured to be fitted interchangeably with at least two different types of optoelectronic devices;
   - at least one trigger channel configured for triggering the monitoring of the operational parameters by using the at least two readout channels, wherein the triggering is performed in a simultaneous manner.
Embodiment 2: The readout unit according to the preceding embodiment, wherein the at least one operational parameter is selected from at least one of: a voltage; a current.
Embodiment 3: The readout unit according to the preceding embodiment, wherein the voltage is a low voltage, wherein the low voltage is a voltage of up to 1V, 2V, 3V, 4V or 5V.
Embodiment 4: The readout unit according to any one of the two preceding embodiments, wherein the current is a low current, wherein the low current is an electrical current of up to 20 µA, 40 µA, 60 µA, 80 µA or 100 µA.
Embodiment 5: The readout unit according to any one of the preceding embodiments, wherein the optoelectronic device is selected from at least one of: a light emitting element; a photosensitive element.
Embodiment 6: The readout unit according to the preceding embodiment, wherein, when the optoelectronic device is a light emitting element, the at least one type of light emitting element is selected from
   - a light emitting diode;
   - an incandescent lamp;
   - a thermal infrared emitter;
   - a semiconductor laser.
Embodiment 7: The readout unit according to any of the two preceding embodiments, wherein the light emitting diode has a phosphorous coating.
Embodiment 8: The readout unit according to any one of the three preceding embodiments, wherein the light emitting element is a broadband light source, specifically from 380 nm to 3000 nm, more specifically from 780 nm to 2500 nm, more specifically from 1400 nm to 2400 nm.
Embodiment 9: The readout unit according to the preceding embodiment, wherein the broadband light source comprises a plurality of light emitting diodes each having an emission spectrum comprising a specific wavelength interval, wherein the plurality of the light emitting diodes is configured to cover a selected wavelength interval which exceeds the specific wavelength intervals of each light emitting diode in the plurality of the light emitting diodes.
Embodiment 10: The readout unit according to any one of the five preceding embodiments, wherein the light emitting element is operated using at least one of: a current source; a voltage source.
Embodiment 11: The readout unit according to any one of the last six preceding embodiments, wherein, when the optoelectronic device is a photosensitive element, the at least one type of photosensitive element is selected from
   - a photodiode;
   - a photoresistor;
   - a phototransistor.
Embodiment 12: The readout unit according to any one of the seven preceding embodiments, wherein the photodiode is selected from at least one of a Silicon photodiode, a Ge photodiode, a InGaAs photodiode, a GaAs photodiode, a InP photodiode, a GaAISb photodiode, a GaAsSb photodiode, a GaN photodiode, a SiC photodiode.
Embodiment 13: The readout unit according to any one of the eight preceding embodiments, wherein the photoresistor is selected from at least one of a PbS photoresistor, a CdS photoresistor, a CdSe photoresistor, a CdHgTe photoresistor, a PbS photoresistor, a PbSe photoresistor, a InSb photoresistor, a InSe photoresistor, a SnS photoresistor, a SnSe photoresistor, a ZrS photoresistor, a ZrSe photoresistor, a graphene photoresistor.
Embodiment 14: The readout unit according to any one of the preceding embodiments, wherein monitoring the at least one operational parameter comprises monitoring at least one of: a drift; a degradation, preferably of the monitored optoelectronic device or optoelectronic devices.
Embodiment 15: The readout unit according to any one of the preceding embodiments, wherein the at least two different types of optoelectronic devices operate in at least one of a visible spectacle range or an infrared spectral range.
Embodiment 16: The readout unit according to any of the preceding embodiments, wherein the readout unit comprises at least one first further readout channel, wherein the at least one first further readout channel is configured for monitoring at least one electrical parameter, specifically a bias voltage, generated by a power supply, wherein the power supply is configured for providing power to the readout unit.
Embodiment 17: The readout unit according to any one of the preceding embodiments, wherein the readout unit comprises at least one second further readout channel, wherein the second further readout channel is configured for monitoring at least one temperature monitoring element, wherein the temperature monitoring element is configured for monitoring at least one temperature of the optoelectronic device or optoelectronic devices.
Embodiment 18: The readout unit according to the preceding embodiment, wherein the at least one temperature monitoring element comprises at least one temperature sensor element.
Embodiment 19: The readout unit according any one of the preceding embodiments, wherein the trigger channel may receive at least one trigger signal in order to trigger the monitoring of the readout channels from at least one of: a driving unit, an evaluation unit of a spectrometer device.
Embodiment 20: The readout unit according to any one of the preceding embodiments, wherein the readout unit comprises at least one micro processing element configured for providing at least one trigger signal in order to trigger the monitoring of the readout channels.
Embodiment 21: The readout unit according to the preceding embodiment, wherein the at least one micro processing element is further configured for
   - evaluating the at least one measurement signal related to the operational parameter of the optoelectronic device, wherein the at least one measurement signal is received from at least one readout channel of the at least two readout channels.
Embodiment 22: The readout unit according to the preceding embodiment, wherein, by evaluating the at least one measurement signal related to the optoelectronic device, at least one operational parameter for driving the optoelectronic device is generated, wherein the at least one micro processing element is further configured for determining the generated at least one operational parameter for driving the optoelectronic device in order to regulate the operation of the optoelectronic device.
Embodiment 23: The readout unit according to the preceding embodiment, wherein the at least one micro processing element is further configured for
   - providing the generated at least one operational parameter for driving the optoelectronic device.
Embodiment 24: The readout unit according to the preceding embodiment, wherein the readout unit further comprises at least one transmission channel, wherein the at least one transmission channel is configured for transmitting the at least one operational parameter provided by micro processing element to the at least one of: the driving unit configured for driving the operation of the optoelectronic device; the evaluation unit of the spectrometer device.
Embodiment 25: The readout unit according to any of the preceding embodiments, wherein the readout unit further comprises a power supply, preferably wherein said power supply may provide an internal bias, configured for at least one of
   - driving the at least one optoelectronic device;
   - generating at least one bias voltage for at least one optoelectronic device.
Embodiment 26: The readout unit according to any of the preceding embodiments, wherein the readout unit is further configured for monitoring at least one operational parameter of the driving unit comprised by a spectrometer device, preferably by using a third further readout channel, wherein the readout unit is further configured for transmitting the readout operational parameter of the driving unit to the evaluation unit, preferably by using the at least one transmission channel.
Embodiment 27: A spectrometer device for obtaining at least one item of spectral information on at least one object by spectroscopic measurement, wherein the spectrometer device comprises a readout unit according to any one of the preceding embodiment, wherein the spectrometer device further comprises:
   - at least one light emitting element, wherein the light emitting element is configured for emitting illumination light onto the object in order to generate detection light;
   - at least one detector, wherein the detector is configured for generating at least one detector signal when detecting the detection light;
   - at least one evaluation unit, wherein the evaluation unit is configured for obtaining the item of spectral information by evaluating the generated at least one detector signal.
Embodiment 28: The spectrometer device according to the preceding embodiment referring to a spectrometer device, wherein the spectrometer device comprises
   - at least two optoelectronic devices, wherein the optoelectronic devices are monitored by the readout unit via the at least two readout channels comprised by the readout unit in a manner that at least one measurement signal related to the operational parameter of the optoelectronic device is generated.
Embodiment 29: The spectrometer device according to the preceding embodiment referring to a spectrometer device, wherein at least one of: the at least one light emitting element; the at least one detector, is used as an optoelectronic device monitored by the readout unit via the at least two readout channels comprised by the readout unit.
Embodiment 30: The spectrometer device according to any one of the preceding embodiments referring to a spectrometer device, wherein the spectrometer device further comprises
   - at least one driving unit configured for driving at least one optoelectronic device of the at least two optoelectronic devices in a manner that the driving unit transmits at least one operational parameter to the at least one optoelectronic device.
Embodiment 31: The spectrometer device according to the preceding embodiment referring to a spectrometer device, wherein the driving unit and/or the evaluation unit is further configured for transmitting at least one trigger signal configured for triggering the monitoring of the operational parameters by using the at least two readout channels.
Embodiment 32: The spectrometer device according to any one of the two preceding embodiments referring to a spectrometer device, wherein the driving unit is further configured for receiving the at least one measurement signal, wherein the at least one measurement signal is transmitted by at least one transmission channel of the readout unit, particularly in order to select and/or determine at least one operational parameter for driving at least one optoelectronic device by using the driving unit.
Embodiment 33: The spectrometer device according to any one of the three preceding embodiments referring to a spectrometer device, wherein the driving unit is further configured for transmitting the operational parameter for driving the at least one optoelectronic device, wherein the operational parameter is transmitted to the evaluation unit.
Embodiment 34: The spectrometer device according to any one of the four preceding embodiments referring to a spectrometer device, wherein the readout unit is further configured for monitoring at least one operational parameter of the driving unit comprised by a spectrometer device by using a third further readout channel, preferably wherein the readout unit is further configured for transmitting the readout operational parameter to the evaluation unit by using the at least one transmission channel.
Embodiment 35: The spectrometer device according to any one of the eight preceding embodiments referring to a spectrometer device, wherein the evaluation unit is further configured for receiving the at least one measurement signal, wherein the at least one measurement signal is transmitted by the at least one transmission channel of the readout unit, particularly in order to compensate at least one of: a drift; a degradation, preferably of the monitored optoelectronic device or optoelectronic devices, more preferably when obtaining the item of spectral information.
Embodiment 36: The spectrometer device according to any one of the preceding embodiments referring to a spectrometer device, wherein the spectrometer device further comprises:
   - at least one power supply, wherein the power supply is monitored by the readout unit via the at least one first further readout channel comprised by the readout unit, wherein the power supply is configured for providing power to the readout unit.
Embodiment 37: The spectrometer device according to any one of the preceding embodiments referring to a spectrometer device, wherein the spectrometer device further comprises:
   - at least one temperature monitoring element, wherein the temperature monitoring element is monitored by the readout unit via the at least one second further readout channel comprised by the readout unit.
Embodiment 38: The spectrometer device according to any one of the preceding embodiments referring to a spectrometer device, wherein the at least one detector comprises a plurality of photosensitive elements sensitive to differing wavelength intervals.
Embodiment 39: The spectrometer device according to any one of the preceding embodiments referring to a spectrometer device, wherein the spectrometer device further comprises at least one wavelength-selective element, wherein the wavelength-selective element is disposed in at least one of:
   - the at least one beam path of the illumination light;
   - the at least one beam path of the detection light.
Embodiment 40: The spectrometer device according to the preceding embodiments referring to a spectrometer device, wherein the at least one wavelength-selective element is configured and/or arranged in a manner that any photosensitive element of the plurality of photosensitive elements is exposed to an individual spectral range of light.
Embodiment 41: The spectrometer device according to any one of the preceding embodiments referring to a spectrometer device, wherein the light emitting element is at least one of:
   - a thermal radiator;
   - a microelectromechanical system (MEMS)-based emitter;
   - a laser, specifically a vertical cavity surface emitting laser (VCSEL), particularly emitting at least one wavelength in the infrared region;
   - a light-emitting diode (LED), particularly
      ∘ a LED emitting light that is at least partially located in the infrared spectral range and/or
      ∘ a LED illuminating a phosphor for light-conversion of light generated by the LED, wherein the luminescent material generates converted light that is at least partly located in the near-infrared spectral range.
Embodiment 42: A mobile device, wherein the mobile device comprises a spectrometer device according to any one of the preceding claims referring to a spectrometer device.
Embodiment 43: A method for operating a spectrometer device for obtaining spectroscopic information on at least one object, wherein the method comprises using a spectrometer device according to any one the preceding claims for obtaining spectroscopic information on at least one object.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figures 1A and 1B: show an exemplary readout unit comprising two readout channels for monitoring optoelectronic devices;
- Figures 2A and 2B: show different types of photosensitive elements;
- Figures 3A and 3B: show different types of driving units for driving light emitting elements;
- Figure 4: shows a further exemplary readout unit configured for monitoring optoelectronic devices;
- Figure 5: shows a further exemplary readout unit configured for monitoring optoelectronic devices;
- Figure 6: shows a further exemplary readout unit configured for monitoring optoelectronic devices; and
- Figure 7: shows a schematic sketch of an exemplary spectrometer device.

### Detailed description of the embodiments

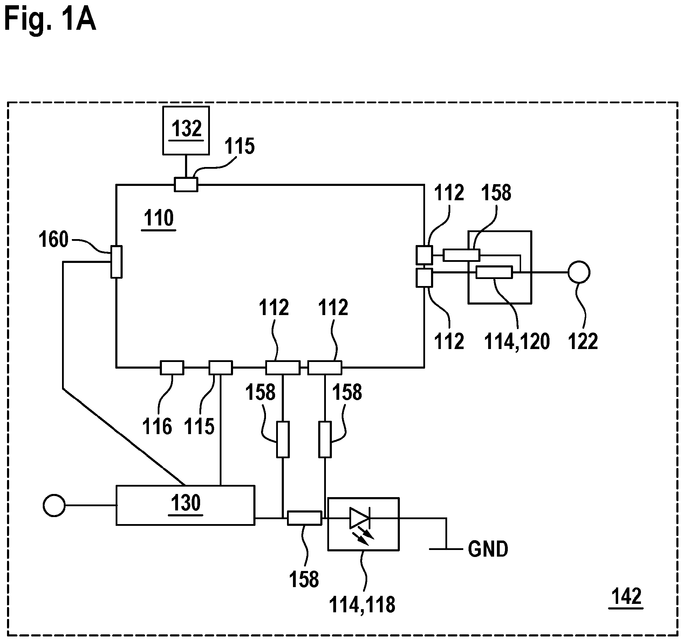

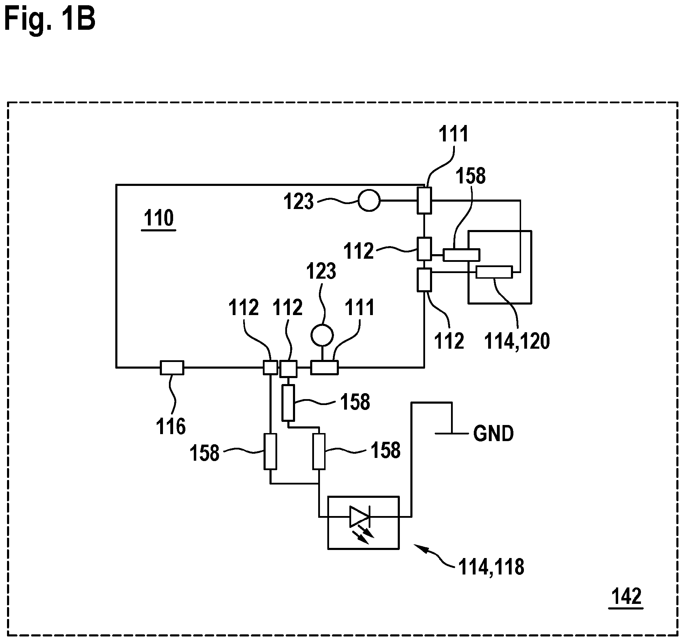

In Figures 1A and 1B, an exemplary readout unit 110 is shown. The readout unit 110 comprises at least two readout channels 112. Herein each readout channel 112 is configured for monitoring at least one operational parameter of a, preferably different, optoelectronic device 114 and, thereby, generating at least one measurement signal related to the operational parameter of the optoelectronic device 114. The at least two readout channels 112 are configured to be fitted interchangeably with at least two different types of optoelectronic devices 114. The readout unit 110 comprises at least one trigger channel 116 configured for triggering the monitoring of the operational parameters by using the at least two readout channels 112, wherein the triggering is performed in a simultaneous manner. Said different optoelectronic devices 114 may be of the same type or of different type. The term "different optoelectronic devices" may refer to a first readout channel reading out a first optoelectronic device and a second optoelectronic device reading out a second device. The first optoelectronic device and the second optoelectronic device may be of the same type or of a different type.

The readout unit 110 may be further configured for monitoring at least one operational parameter of a driving unit 130 comprised by a spectrometer device 142 by using a third further readout channel 160. The readout unit 110 may be further configured for transmitting the readout operational parameter of the driving unit 130 to an evaluation unit 132 comprised by the spectrometer device 142 by using at least one transmission channel 115. In the context of the disclosure herein the driving unit 130 comprised by the spectrometer device 142 and/or the evaluation unit 132 comprised by the spectrometer device 142 may be external units 130, 132 in respect to the readout unit 110, since the external units 130, 132 are not comprised by and/or are not integral to the readout unit 110. The spectrometer device 142 may comprise the readout unit 110.

In the exemplary embodiment of Figure 1A, the driving unit 130 that is external of the readout unit 110 provides a current to the light emitting element 118. At least one transmission channel 115 comprised by the readout unit provides the information to the driving unit 130 how to set the operational parameters of the light emitting element 118 and further triggers driving the light source, specifically simultaneously to the readout of the operational parameters via the at least two readout channels 112. Further, the readout channels 112 measure a forward voltage and a drive current related to the light emitting element 118 by using measurement resistors 158. The measurement resistors 158 could also be internal measurement resistors 158. Internal measurement resistors 158 may be comprised by and/or integral to the readout unit 110.

Further in the exemplary embodiment of Figure 1A, an external bias 122 is provided for the photosensitive element 120. One of the readout channels 112 measures the external bias 122 related to the photosensitive element 120. The other readout channel 112 measures the current of the photosensitive element 120. Again, the measurement resistor 158 could also be an internal measurement resistor 158.

In the exemplary embodiment of Figure 1B, the driving current is provided via a bias channel 111 of the readout unit 110 to the light emitting element 118. The driving current is provided from an internal bias 123. The readout channels 112 measure a forward voltage and a current via a voltage difference over a measurement resistor 158. This embodiment may show that several readout channels 112 may be related to the same optoelectronic device 114. The measurement resistors 158 could also be internal measurement resistors 158.

Further in the exemplary embodiment of Figure 1B, a bias is provided to the photosensitive element 120 by a further bias channel 111 of the readout unit 110. Again, the bias is provided by a further internal bias supply 123. One of the readout channels 112 measures the bias voltage. The other readout channel 112 measures the current of the photosensitive element 120.

The at least one operational parameter may be selected from at least one of: a voltage; a current. The voltage may be a low voltage, wherein the low voltage is a voltage of up to 1V, 2V, 3V, 4V or 5V. The current may be a low current, wherein the low current is an electrical current of up to 20 µA, 40 µA, 60 µA, 80 µA or 100 µA. Monitoring the at least one operational parameter may comprise monitoring at least one of a drift, a degradation, of the optoelectronic devices 114. The optoelectronic device 114 may be selected from at least one of a light emitting element 118 and a photosensitive element 120.

The light emitting element 118 may be at least one of a light emitting diode, an incandescent lamp, a thermal infrared emitter, a semiconductor laser. The light emitting diode may have a phosphorous coating. The light emitting element 118 may be a broadband light source, specifically from 380 nm to 3000 nm, more specifically from 780 nm to 2500 nm, more specifically from 1400 nm to 2400 nm. The broadband light source may comprise a plurality of light emitting diodes each having an emission spectrum comprising a specific wavelength interval. Further, the plurality of the light emitting diodes may be configured to cover a selected wavelength interval which exceeds the specific wavelength intervals of each light emitting diode in the plurality of the light emitting diodes. The light emitting element 118 may be operated using at least one of a current source 124 and a voltage source 126.

The photosensitive element 120 may be selected from at least one of a photodiode, a photoresistor, a phototransistor. The photodiode may be selected from at least one of a Silicon photodiode, a Ge photodiode, a InGaAs photodiode, a GaAs photodiode, a InP photodiode, a GaAISb photodiode, a GaAsSb photodiode, a GaN photodiode, a SiC photodiode. The photoresistor may be selected from at least one of a PbS photoresistor, a CdS photoresistor, a CdSe photoresistor, a CdHgTe photoresistor, a PbS photoresistor, a PbSe photoresistor, a InSb photoresistor, a InSe photoresistor, a SnS photoresistor, a SnSe photoresistor, a ZrS photoresistor, a ZrSe photoresistor, a graphene photoresistor.

The at least two different types of optoelectronic devices 114 may operate in at least one of a visible spectacle range or an infrared spectral range.

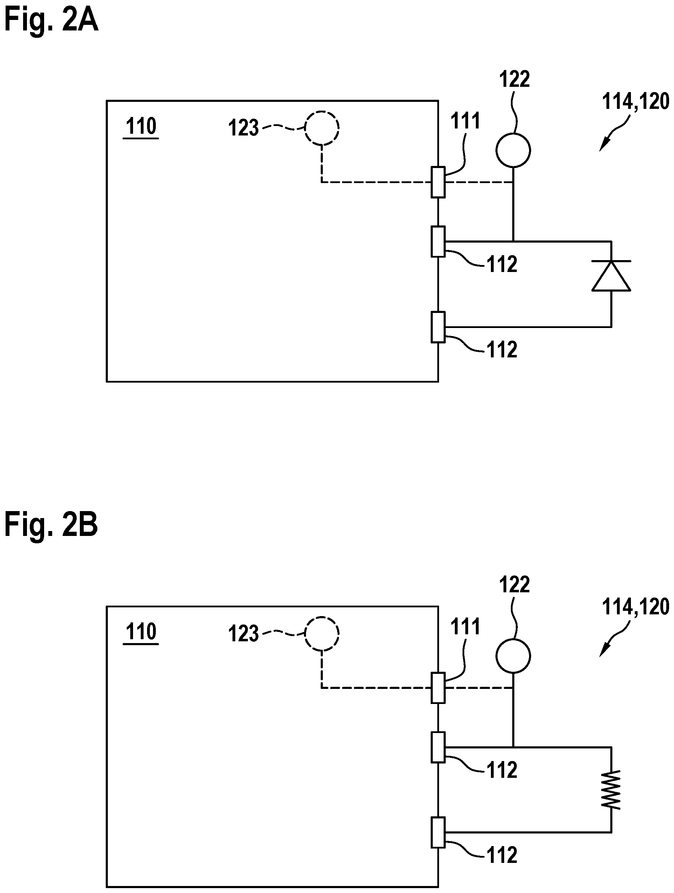

In Figures 2A and 2B, two different types of photosensitive element 120 are depicted, namely a photodiode in Figure 2A, and a photoresistor in Figure 2B. Both types of photosensitive elements may be connected to the readout unit 110 via the readout channels 112 depicted in Figure 1 or any one of the further Figures. As may be further derived from Fig. 2A and 2B, a bias voltage may be applied by using an external bias 122. Alternatively or in addition, also an internal bias 123 may be used (indicated by the dashed lines).

The internal bias 123 voltage or the external bias 122 voltage may then, consequently, be measured via a measurement channel 112 of the readout unit 110 as one operational parameter of the photosensitive element 120. Another measurement channel 112 may be used to measure the current of the photosensitive element120, which includes the current that may be generated by optical illumination.

Alternatively, the photodiode shown in Figure 2A may be zero-biased and/or non-biased. In such a case, both contacts of the photodiode may be used for voltage measurements and/or current measurements of the non-biased photodiode.

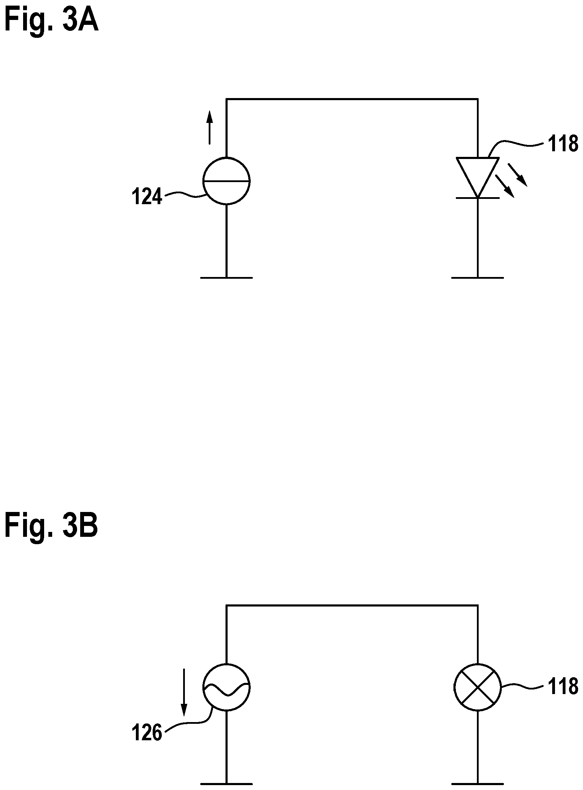

In the exemplary embodiment shown in Figures 3A and 3B, two different types of light emitting elements 118 are depicted. In the exemplary embodiment shown in Figure 3A, an LED is used as the light emitting element 118. The LED is electrically connected to a current source 124. In Figure 3B an incandescent light source is used as the light emitting element 114 and is electrically connected to a voltage source 126. Consequently, as may be derived from Figures 3A and 3B, the light emitting elements 118 may be operated using at least one of a current source 124; a voltage source 126. Both types of light emitting elements 118 may be monitored by the readout unit 110 described in the exemplary readout unit depicted in Figure 1 or any one of the further Figures.

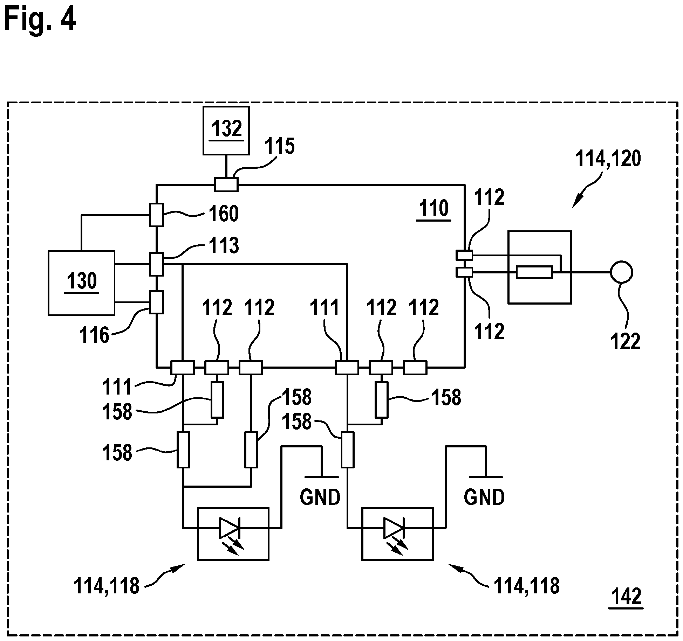

Figure 4 shows a further exemplary readout unit 110. The reference signs of the preceding Figures apply accordingly. The readout unit 110 depicted in Figure 4 monitors a plurality of light emitting elements 118 and a photosensitive element 120 via multiple readout channels 112. The multiple light emitting elements 118, for example the multiple LEDs, may be operated at different wavelengths. The readout unit 110 may drive the light emitting elements 118 or the light emitting elements 118 may be driven via an external driving unit 130, preferably an external driving unit 130 that may be connected to a driving channel 113 and, optionally, be routed over the readout unit 110 to at least one bias channel 111. Alternatively, the bias could also be provided by an internal bias source as shown in Figure 1B.

The trigger channel 116 may receive at least one trigger signal in order to trigger the monitoring of the readout channels 112 from at least one of: a driving unit 130 (depicted here), an evaluation unit 132 of a spectrometer device 142. The readout unit 110 may further be configured for transmitting the operational parameter for driving the at least one optoelectronic device 114. The operational parameter may be transmitted to the evaluation unit 132 (depicted here) or the driving unit 130, preferably by using at least one transmission channel 115.

The readout unit 110 may further be configured for monitoring at least one operational parameter of the driving unit 130 comprised by a spectrometer device 142, preferably by using a third further readout channel 160. The readout unit 110 may be further configured for transmitting the read out operational parameter of the driving unit 130 to the evaluation unit 132 by using the at least one transmission channel 115.

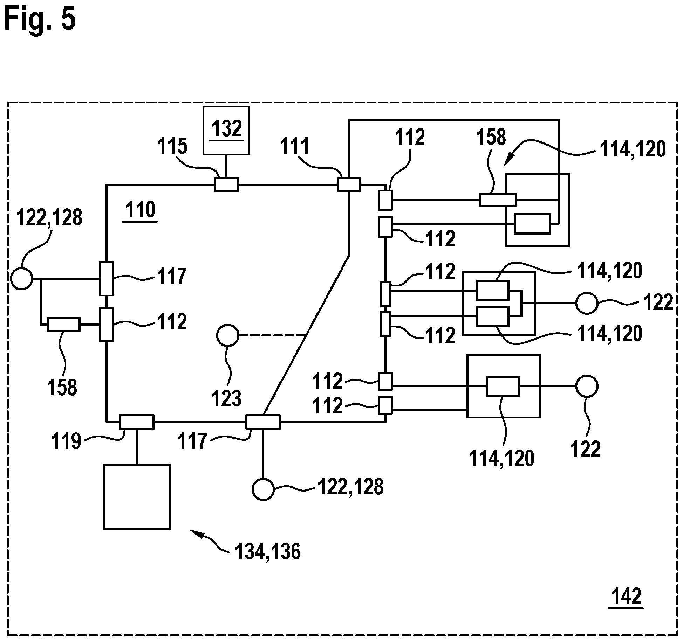

Figure 5 shows a further exemplary readout unit 110. The reference signs of the preceding Figures apply accordingly. The readout unit 110 depicted in Figure 5 monitors a plurality of photosensitive elements 120. For example, a photosensitive element 120 and an array of photosensitive elements 120 each with an external bias 122. A further photodetector with internal bias 123 is further depicted.

A first further readout channel 117 configured for monitoring at least one electrical parameter, specifically a bias voltage 122, generated by a power supply 128, is shown. The power supply 128 may be configured for providing power to the readout unit 110. A second further readout channel 119 is shown, wherein the second further readout channel 119 is configured for monitoring at least one temperature monitoring element 134, wherein the temperature monitoring element 134 is configured for monitoring at least one temperature of the optoelectronic device 114 or optoelectronic devices 114. The least one temperature monitoring element 134 may comprise at least one temperature sensor element 136.

The readout unit 110 may further comprise a power supply 128 configured for at least one of driving the at least one optoelectronic device 114, generating at least one bias voltage 122 for at least one optoelectronic device 114.

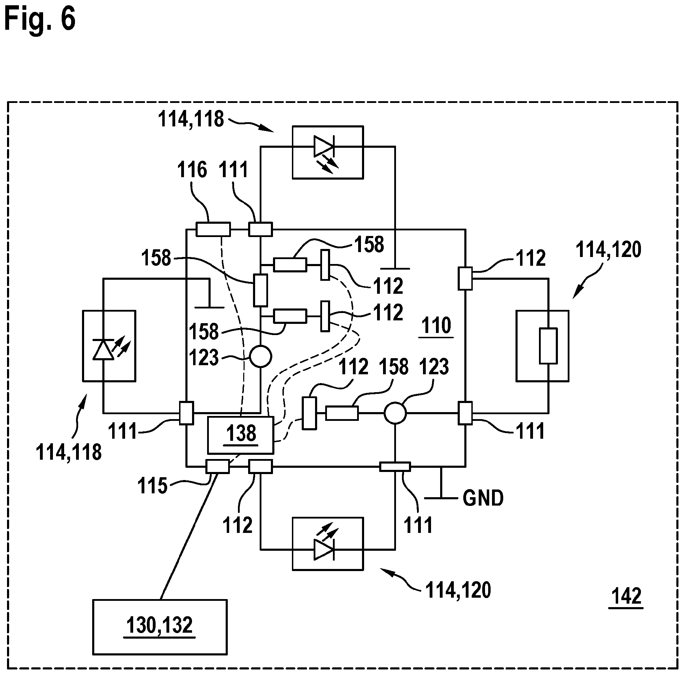

Figure 6 shows a further exemplary readout unit 110. The reference signs of the preceding Figures apply accordingly. The readout unit 110 depicted in Figure 6 monitors two different types of photosensitive elements 120, namely a photodetector and a photoresistor. The readout unit 110 further monitors two different types of light emitting elements 118. The two different types of light emitting elements 118 and the two different types of photosensitive elements 120 may operate in at least one of a visible spectacle range; a near infrared spectacle range and an infrared spectacle range. In particular, the light emitting element 118 may be different types of LEDs, such as at least one near-infrared LED or at least one visible light LED.

The readout unit may comprise at least one micro processing element 138. The micro processing element 138 may be configured for providing at least one trigger signal in order to trigger the monitoring of the readout channels 112, preferably via an electrical connection indicated by the dotted lines.

The at least one micro processing element 138 may be further configured for evaluating the at least one measurement signal related to the operational parameter of the optoelectronic device 114. The at least one measurement signal may be received from at least one readout channel 112 of the at least two readout channels 112, preferably via an electrical connection (indicated by the dotted lines).

By evaluating the at least one measurement signal related to the optoelectronic device 114, at least one operational parameter for driving the optoelectronic device 114 may be generated, wherein the at least one micro processing element 138 is further configured for determining the generated at least one operational parameter for driving the optoelectronic device 114 in order to regulate the operation of the optoelectronic device 114. The at least one micro processing element 138 may further be configured for providing the generated at least one operational parameter for driving the optoelectronic device 114.

The readout unit 110 further may comprise at least one transmission channel 115, wherein the transmission channel 115 may be configured for transmitting the at least one operational parameter provided by micro processing element 138 to the at least one of: the driving unit 130 configured for driving the operation of the optoelectronic device, the evaluation unit 132 of the spectrometer device.

Alternatively or in addition, the readout unit may comprise a micro processing element 138 configured to receive and process the measurement signals generated via the at least two readout channels 112. The readout unit 110 may forward the processed measurement signals and operational parameters to the evaluation unit 132 and/or the external driving unit 130, preferably by using the at least one transmission channel 115 and/or via an electrical connection indicated by the dotted lines.

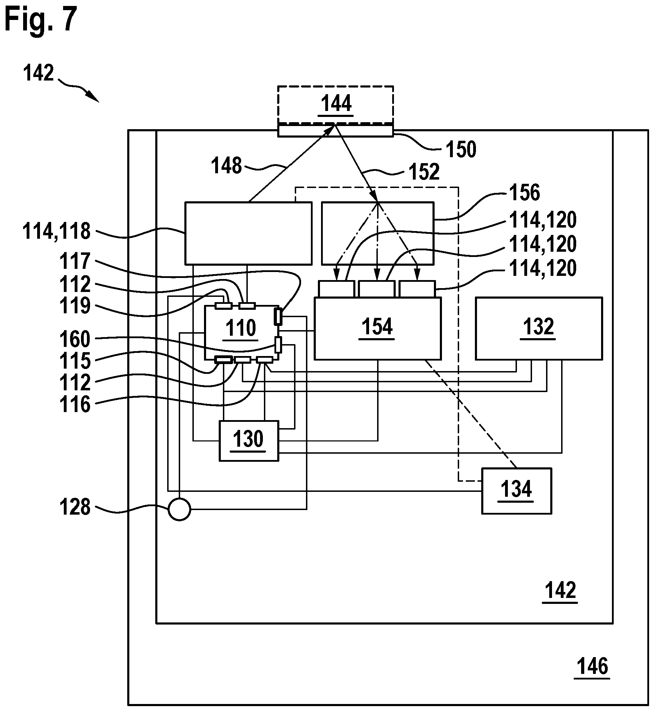

Figure 7 shows a spectrometer device 142 for obtaining at least one item of spectral information on at least one object 144 by spectroscopic measurement, as disclosed elsewhere herein. The spectrometer device 142 comprises a readout unit 110. The spectrometer device 142 may be comprised by a mobile device 146, as exemplarily depicted in Figure 7. The spectrometer device 142 comprises:
- at least one light emitting element 118, wherein the light emitting element 118 is configured for emitting illumination light 148 for illuminating at least one object 144, particularly through a sample interface 150, in order to generate detection light 152 from the at least one object 144;
- at least one photosensitive element 120, wherein the photosensitive element 120 is configured for generating at least one measurement signal when receiving the detection light 152 from the object 144, particularly through the sample interface 152, in order to acquire the item of spectral information; and
- at least one evaluation unit 132, wherein the evaluation unit 132 is configured for obtaining the item of spectral information by evaluating the generated at least one detector signal, preferably at least one measurement signal generated by monitoring the at least one photosensitive element 120 by using the readout unit 110, specifically the at least two readout channels 112, may be or may comprise the at least one detector signal.

The at least one photosensitive element 120 may be comprised by a detector 154. The spectrometer device 142 may comprise at least two photosensitive elements 120, each being sensitive to a different wavelength interval.

The spectrometer device 142 may comprise
- at least two optoelectronic devices 114, wherein the optoelectronic devices 114 are monitored by the readout unit 110 via the at least two readout channels 112 comprised by the readout unit 110 in a manner that at least one measurement signal related to the operational parameter of the optoelectronic device 114 is generated.

At least one of: the at least one light emitting element 118; the at least one detector 154, specifically at least one photosensitive element 120 of the detector 154, may be used as an optoelectronic device 114 monitored by the readout unit 110 via the at least two readout channels 112 comprised by the readout unit 114.

The spectrometer device 142 further comprises
- at least one driving unit configured 130 for driving at least one optoelectronic device 114 of the at least two optoelectronic devices 114 in a manner that the driving unit transmits at least one operational parameter to the at least one optoelectronic device 114.

The driving unit 130 and/or the evaluation unit 132 may be further configured for transmitting at least one trigger signal configured for triggering the monitoring of the operational parameters by using the at least two readout channels 112. The trigger signal may be transmitted to the trigger channel 116.

The driving unit 130 may be further configured for receiving the at least one measurement signal, wherein the at least one measurement signal is transmitted by at least one transmission channel 115 of the readout unit 110, particularly in order to select and/or determine at least one operational parameter for driving at least one optoelectronic device 114 by using the driving unit 130.

The driving unit 130 may be further configured for transmitting the operational parameter for driving the at least one optoelectronic device 114, wherein the operational parameter is transmitted to the evaluation unit 132.

The readout unit 110 is further configured for monitoring at least one operational parameter of the driving unit 130 comprised by a spectrometer device by using a third further readout channel 160, wherein the readout unit 110 is further configured for transmitting the read out operational parameter to the evaluation unit 132 by using the at least one transmission channel 115.

The evaluation unit 132 may be further configured for receiving the at least one measurement signal, wherein the at least one measurement signal is transmitted by the at least one transmission channel 115 of the readout unit 110, particularly in order to compensate at least one of: a drift; a degradation, preferably of the monitored optoelectronic device 114 or optoelectronic devices 114, more preferably when obtaining the item of spectral information.

The spectrometer device 142 further may comprise:
- at least one power supply 128, wherein the power supply 128 is monitored by the readout unit 110 via the at least one first further readout channel 117 comprised by the readout unit 110, wherein the power supply 128 is configured for providing power to the readout unit 110.

The spectrometer device 142 further may comprise:
- at least one temperature monitoring element 134, wherein the temperature monitoring element 134 is monitored by the readout unit 110 via the at least one second further readout channel 119 comprised by the readout unit 110.

The spectrometer device 142 may further comprise at least one wavelength-selective element 156. The wavelength-selective element 156 may be disposed in at least one of a beam path of the illumination light 148; and a beam path of the detection light 152. The at least one wavelength-selective element 156 may be at least one of configured and arranged in a manner that at least two photosensitive elements 120 of the plurality of the photosensitive elements 120 are exposed to an individual wavelength interval of the detection light 152 from the object 144. The wavelength-selective element 156 may be or may comprise at least one of a length variable filter; a static filter, such as a monochromatic filter; a tunable filter, particularly a MEMS Fabry-Perot cavity; an optical lens; a diffractive or dispersive element.

Further, a method for operating a spectrometer device 142 is disclosed (not shown), wherein the method comprises using a spectrometer device 142 for obtaining spectral information on at least one object 144 as disclosed elsewhere herein.

### List of reference numbers

- 110: readout unit
- 111: bias channel
- 112: readout channel
- 113: driving channel
- 114: optoelectronic device
- 115: transmission channel
- 116: trigger channel
- 117: first further readout channel
- 118: light emitting element
- 119: second further readout channel
- 120: photosensitive element
- 122: external bias
- 123: internal bias
- 124: current source
- 126: voltage source
- 128: power supply
- 130: driving unit
- 132: evaluation unit
- 134: temperature monitoring element
- 136: temperature sensor element
- 138: micro processing element
- 140: transmission channel
- 142: spectrometer device
- 144: object
- 146: mobile device
- 148: illumination light
- 150: sample interface
- 152: detection light
- 154: detector
- 156: wavelength-selective element
- 158: measurement resistor
- 160: third further readout channel

## Claims

1. A readout unit (110) comprising
- at least two readout channels (112), wherein each readout channel (112) is configured for monitoring at least one operational parameter of an optoelectronic device (114) and, thereby, generating at least one measurement signal related to the at least one operational parameter of the optoelectronic device (114), wherein the at least two readout channels (112) are configured to be fitted interchangeably with at least two different types of optoelectronic devices (114);
- at least one trigger channel (116) configured for triggering the monitoring of the operational parameters by using the at least two readout channels (112), wherein the triggering is performed in a simultaneous manner.

2. The readout unit (110) according to the preceding claim, wherein the optoelectronic device (114) is selected from at least one of: a light emitting element (118); a photosensitive element (120).

3. The readout unit (110) according to any one of the preceding claims, wherein monitoring the at least one operational parameter comprises monitoring at least one of: a drift; a degradation.

4. The readout unit (110) according to any of the preceding claims, wherein the readout unit (110) comprises at least one first further readout channel (117), wherein the at least one first further readout channel (117) is configured for monitoring at least one electrical parameter generated by a power supply (128), wherein the power supply (128) is configured for providing power to the readout unit (110).

5. The readout unit (110) according to any one of the preceding claims, wherein the readout unit (110) comprises at least one second further readout channel (119), wherein the second further readout channel (119) is configured for monitoring at least one temperature monitoring element (134), wherein the temperature monitoring element (134) is configured for monitoring at least one temperature of the optoelectronic device (114).

6. The readout unit (110) according to any of the preceding claims, wherein the readout unit (110) is further configured for monitoring at least one operational parameter of a driving unit (130) comprised by a spectrometer device (142) by using a third further readout channel (160), wherein the readout unit (110) is further configured for transmitting the read out operational parameter of the driving unit (130) to the evaluation unit (132) comprised by the spectrometer device (142) by using at least one transmission channel (115).

7. The readout unit according any one of the preceding claims, wherein the trigger channel (116) receives at least one trigger signal in order to trigger the monitoring of the readout channels (112) from at least one of: the driving unit (130), the evaluation unit (132).

8. The readout unit (110) according to any one of the preceding claims 1 to 6, wherein the readout unit (110) comprises at least one micro processing element (138) configured for providing at least one trigger signal in order to trigger the monitoring of the readout channels (112).

9. The readout unit according to the preceding claim, wherein the at least one micro processing element (138) is further configured for
- evaluating the at least one measurement signal related to the operational parameter of the optoelectronic device (114), wherein the at least one measurement signal is received from at least one readout channel (112) of the at least two readout channels (112).

10. The readout unit (110) according to the preceding claim, wherein, by evaluating the at least one measurement signal related to the optoelectronic device (114), at least one operational parameter for driving the optoelectronic device (114) is generated, wherein the at least one micro processing element (138) is further configured for determining the at least one operational parameter for driving the optoelectronic device (114) in order to regulate the operation of the optoelectronic device (114).

11. The readout unit (110) according to the preceding claim, wherein the at least one micro processing element (138) is further configured for
- providing the generated at least one operational parameter for driving the optoelectronic device (114).

12. The readout unit (110) according to the preceding claim, wherein the readout unit (110) further comprises at least one transmission channel (115), wherein the transmission channel (115) is configured for transmitting the at least one operational parameter provided by the micro processing element (138) to the at least one of: the driving unit (130) configured for driving the operation of the optoelectronic device (114), the evaluation unit (132).

13. A spectrometer device (142) for obtaining at least one item of spectral information on at least one object (144) by spectroscopic measurement, wherein the spectrometer device (142) comprises a readout unit (110) according to any one of the preceding claims, wherein the spectrometer device (142) further comprises:
- at least one light emitting element (118), wherein the light emitting element (118) is configured for emitting illumination light (148) onto the object (144) in order to generate detection light (152);
- at least one detector (154), wherein the detector (154) is configured for generating at least one detector signal when detecting the detection light (152);
- at least one evaluation unit (132), wherein the evaluation unit (132) is configured for obtaining the item of spectral information by evaluating the generated at least one detector signal.

14. A mobile device (146), wherein the mobile device (146) comprises a spectrometer device (142) according to the preceding claim.

15. A method for operating a spectrometer device (142) for obtaining spectroscopic information on at least one object (144), wherein the method comprises using a spectrometer device (142) according to the preceding claim referring to a spectrometer device (142) for obtaining spectroscopic information on at least one object (144).
